# EUROPEAN PATENT APPLICATION

(11) **EP 1 146 712 A1**
(43) Date of publication of application: **17.10.2001**
(21) Application number: 00302990.7
(22) Date of filing: 10.04.2000
(51) Int. Cl.: H04L 29/06

(54) **Authentication in telecommunication system**

(71) Applicant: BRITISH TELECOMMUNICATIONS public limited company, London EC1A 7AJ (GB)
(72) Inventor: Pilkingtgon, John David Richard, Ipswich, Suffolk IP9 2UT (GB); Brown, Katherine Margaret, Ipswich, Suffolk IP3 9JP (GB); Ralph, Daniel Thomas, Ipswich, Suffolk IP3 8TA (GB); Reilly, Brian, East Yorkshire, HU17 9HY (GB); Stonebridge, Martin, Ipswich, Suffolk IP2 9DE (GB)
(74) Representative: Lidbetter, Timothy Guy Edwin

(57) **Abstract**

Method of controlling access from a terminal to a telecommunications network (38), the method comprises the steps of:
establishing communication between the terminal (32) and an interface means (33, 34, 35);
transmitting a request for access and authentication data from the terminal (32) to the first access control means (33),
forwarding the request for access to a secure access control system (36) arranged to provide access to the telecommunications network (38) only for selected terminals (32);
transmitting a login prompt signal from the secure access control system (36) to the telecommunications terminal (32) in response to the request for access;
returning a login signal from the telecommunications terminal (32) to the secure access control system (36);
comparing the login signal with data stored in a user authentication database (37) associated with the secure access control system (36);
providing a connection to the telecommunications network (38) if the comparison is validated.

## Description

This invention relates to the provision of secure access for telecommunications systems, and in particular in the provision of secure access to distributed or other computer networks using dial-in telecommunications links. Provision of secure access is necessary to prevent abuses by unauthorised users, for example by gaining access to confidential data such as that available on private "Intranets".

It is common practice to provide secure access to systems by requiring the user to enter a security code (Personal Identity Number or "PIN") known only to the authorised user. This can be achieved by providing an access control system and arranging that access to the secure data is only possible through the access control system. (The secure data is described as being within a "firewall", and access through the firewall is only possible through the access control system). The access control system prompts the user to provide a user identity and a Personal Identity Number (PIN) or "password") which, if provided correctly, causes the access control system to allow the user access to the secure data.

The access control procedure requires the user terminal to be configured to interrupt the log-in process by prompting the user to enter the access code, and to abort the log-in process if the correct code is not transmitted. Although typical general-purpose desktop and laptop computers can be configured to do this, the process is cumbersome, and inconvenient if the terminal is only likely to be used for secure access occasionally.

Moreover, some devices and systems currently on the market, such as "WAP" (Wireless Application Protocol) telephones, do not have a permanent connection to the telecommunications system - every time an attempt is made to access data effectively begins a new session. It is therefore necessary to authenticate the terminal every time it is used to access data. This would obviously be very tedious. For this reason the login process is automated. The user identification is permanently programmed into the operating system, and it does not have the capability to interrupt the network connection process to provide any authentication codes. The phones can therefore operate as a normal anonymous internet connection and do not have the ability to allow the user to enter a security code after dialling, and therefore cannot be used to allow secure network login.

According to the invention, there is provided an access control system for controlling a gateway server giving access from a terminal to a telecommunications network, comprising:
interface means for connection to a telecommunications terminal, the interface means having first access control means arranged to receive authentication data generated automatically by the terminal to permit access to the telecommunications network;
and a secure access system connected to the interface means and comprising second access control means to provide access to the telecommunications network only to selected terminals
the second access control means having a user authentication database, and means for generating a login prompt signal for transmission to the telecommunications terminal in response to a request for access, means for comparing a login signal received from the telecommunications terminal with data stored in the user authentication database and means for providing a connection to the telecommunications network.

According to another aspect, there is provided a method of controlling access from a terminal to a telecommunications network, the method comprising the steps of:
establishing communication between the terminal and an interface means;
transmitting an automatic request for access, accompanied by authentication data, from the terminal to the first access control means,
forwarding the request for access, to a secure access control system arranged to provide access to the telecommunications network only for selected terminals;
transmitting a login prompt signal from the secure access control system to the telecommunications terminal in response to the request for access;
returning a login signal from the telecommunications terminal to the secure access control system;
comparing the login signal with data stored in a user authentication database associated with the secure access control system;
providing a connection to the telecommunications network if the comparison is validated.

The interface means may also convert data between a system compatible with the telecommunications terminal (for example WML/WTP) and a system compatible with the second access system (for example HTML/HTTP).

Preferably the second access control means generates a signal in response to a successful comparison, to cause a value to be stored indicative of the telecommunications terminal requesting access,
incoming requests for access are associated with the stored values,
and the access control means is controlled to make a connection to the telecommunications network without the generation of a further login prompt if such a stored value is provided in respect of the telecommunications terminal making the request.

The invention may be used with any suitable transport protocol. The embodiment to be described is designed for use with WAP (Wireless Access Protocol) phones, which establish an Internet Protocol session and then pass WTP (WAP Transport Protocol) signalling over this connection to connect to a WAP server.

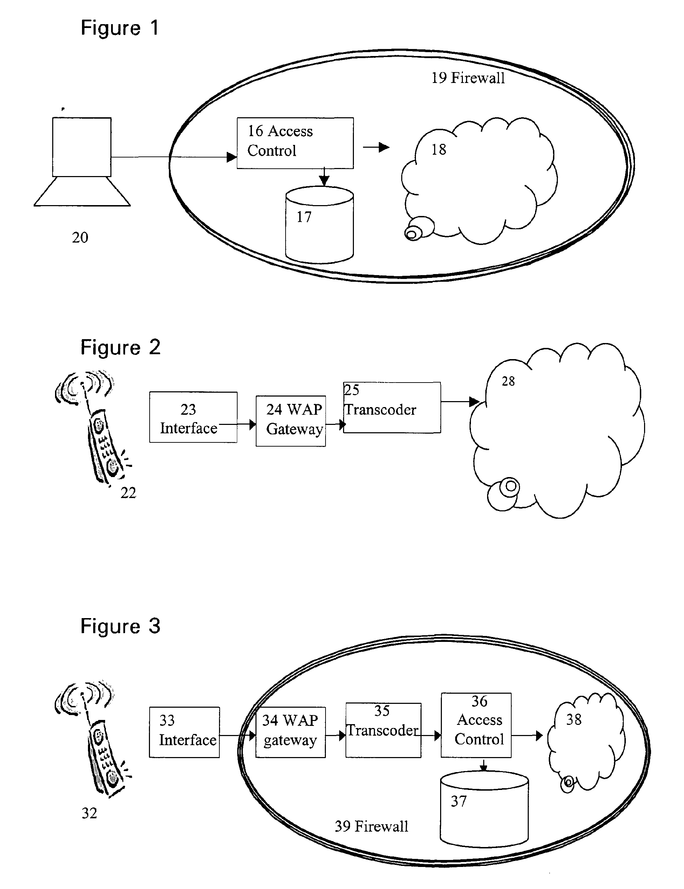

An embodiment of the invention will now be described, by way of example, with reference to the drawings in which:
Figure 1 illustrates schematically a conventional secure access system
Figure 2 illustrates schematically a conventional wireless application protocol access system
Figure 3 illustrates schematically a system according to the invention
Figure 4 is a flow chart illustrating the operation of the system of Figure 3
The conventional system shown in Figure 1 is designed for secure access to a private "Intranet" network 18. A "firewall" 19 is defined, across which access can only be gained from a user terminal 20 through an access control platform 16. The Intranet 18 can only be accessed through this access control platform 16. When a connection is made from the terminal 20 to the access control platform 16, the access control platform returns a login screen to the terminal 16. The user then enters a user identification code and a password, which are read by the access control system 16. The identification code and password are compared with data stored in a security server 17 and connection is made to the network 18 if the code and password are recognised as valid. The connection to the network 18 is maintained for as long as the user maintains the connection between his terminal 20 and the access control system 16.

In the most secure systems a pseudo-random code is also required. The user has an electronic "token" which displays a code, which changes, typically every few minutes, according to a pseudo-random algorithm. The access control system 16 runs the same algorithm, and can therefore verify whether the code entered by the user is the currently-correct code. In combination with password control, this arrangement ensures that only someone who not only knows the user's password and is also currently in possession of the token can access the system. Neither theft of the token, nor illicit acquisition of the password, for example by observation of keystrokes ("shoulder-surfing"), is on its own sufficient to gain access to the system.

Internet-compatible mobile handsets are now becoming available, working according to the "WAP" (Wireless Access Protocol) standard. The proposed "Universal Mobile Telephone System" (UMTS) - also known as "Third Generation Mobile System" (TGMS) will also allow access to data services. Because of the relatively high cost of "airtime" for mobile communications, the access arrangements for WAP and UMTS systems differ from those used by fixed terminals. As shown in Figure 2, the user terminal 22 contacts an interface 23 known as a RAS - Remote Access Server - which provides authentication and connectivity to dial-in devices. The terminal automatically transmits its user identification code and password, which are verified by the remote access server 23. A further check may be made using the "Calling Line Identity" (CLI) of the handset 22. Access to the network (the "Internet") 28 is then allowed.

Internet sites generally use a format known as HTML - Hyper Text Markup Language. WAP handsets use a similar, but not identical format known as WML - Wireless Markup Language. The transport protocol generally used within the internet is HTTP - Hyper Text Transport Protocol, but a more efficient protocol is used to transport WML pages to WAP phones, known as WTP - Wireless Transport Protocol. Therefore if a standard Internet page is to be accessed by a WAP phone 22 a WAP Gateway 24 is required to convert data from HTTP to WTP for delivery over an IP link to WAP phones, and a transcoder 25 is also required, to translate HTML pages to WML and vice versa.

In these systems the identification of the user 22 is required primarily to arrange for the call to be paid for and to ensure the handset 22 has not been barred, for example because it has been reported stolen. Access control is therefore relatively simple. Since the handsets are, by their nature, portable, they are less likely to be left unattended than fixed terminals are. Consequently, the user is likely to be aware of any potential for unauthorised use, for example as a result of theft, relatively quickly.

However, because the login takes place automatically, there is no manual password entry and therefore no safeguarding of access to protected sites. The present invention seeks to allow such sites to be accessed by such systems with a similar degree of security to existing fixed systems. However, because each request made by a user terminal 22 for information from the network 28 constitutes a separate call, requiring verification of the user terminal 22, manual password entry for every Internet page requested would be extremely cumbersome.

As shown in Figure 3, the novel arrangement of this invention combines some features from each of the prior art arrangements of Figures 1 and 2. An "Intranet" 38 protected by a "firewall" 39 is accessible by a mobile handset 32. When the mobile handset 32 makes an access attempt, the call is routed to the remote access server 32 as previously described. If the call is directed to the Intranet 38, the RAS 32 routes the call to a WAP gateway 34 located within the "firewall" 39. This special gateway 34 is configured to connect only to a dedicated transcoder 35 which in turn is configured to connect only to one address, namely that of a dedicated access control unit 36. The link between the dedicated transcoder 35 and the dedicated access control unit 36 ensures that any access request from a mobile terminal 32 is subjected to the enhanced security control procedures of the access control unit.

The access control unit 36 is arranged to return a login request to the terminal 32 (converted from the standard HTML format to WML by the transcoder 35) and on receipt of the correct response (verified by comparison with data stored in the security server 37) allows access to the requested page.

When the access control unit 36 authorises access, it also performs a further function. It causes a flag to be set in the transcoder, which identifies the user terminal 32. (This is known as a "cookie"). If a further request from the same terminal 32 is received by the transcoder 35, the cookie identifies the user 32 as having already been authorised and instructs the access control system 36 to authorise access without repeating the login routine. The cookie is set to expire after a predetermined period, if no access requests are made. Thus a login is required when a request is made unless another request has been made by the same user in the recent past. This allows access control to the secure data to be maintained without the requirement for a login routine for every item of data.

Security is provided by placing all the access elements 35, 36, 37, 38 (apart from the remote access server 33) inside the Firewall 39 and only allowing access to the secure Intranet 38 from the ports and IP addresses relating to these elements.

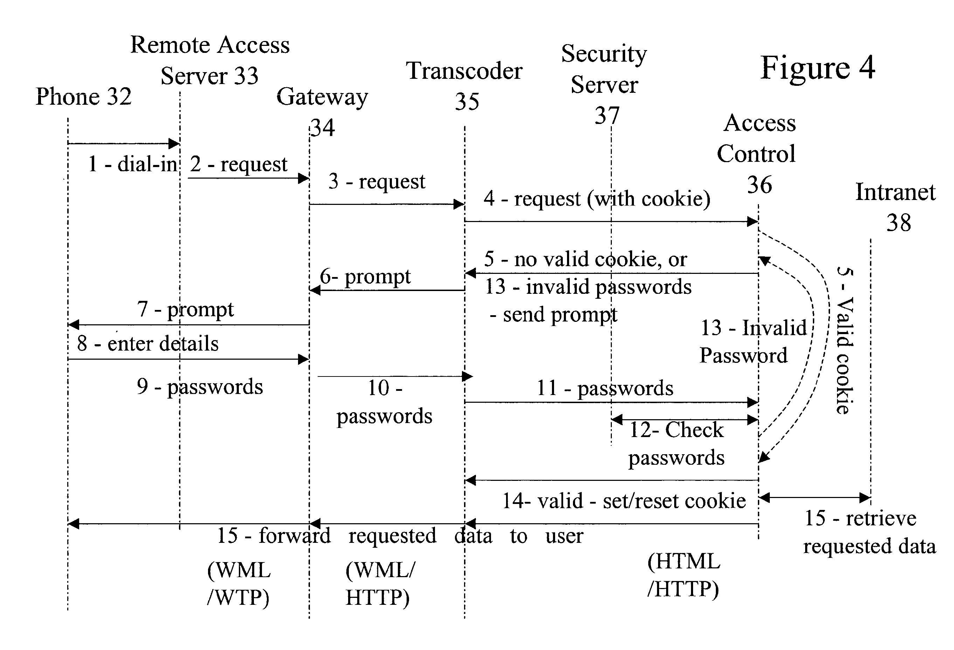

The operation of the system of Figure 3 will now be described in more detail with reference to the flow chart of Figure 4, which illustrates the following fifteen steps:
1. The WAP mobile phone 32 dials into the Remote Access Server 33. Simple authentication takes place, using the username and password stored in the phone 32. A CLI check may also be performed. This procedure sets up an IP (Internet Protocol) connection.
2. The phone 32 contacts the WAP gateway 34 by connecting to an IP address stored in the phone 32, and the phone 32 and gateway 34 negotiate a WTP session, and request a home page.
3. The WAP gateway 34 is configured to only communicate with to the Transcoder 35 so the request for the homepage (encoded in WML using WTP - as indicated by "WML/WTP" in Figure 4) is translated by the WAP Gateway 34 to a WML request over HTTP (WML/HTTP) and passed to the Transcoder 35.
4. The Transcoder 35 (which is configured to only communicate with the access control unit 36 converts the WML request to HTML, and passes the translated request (HTML/HTTP) on to the access control unit 36.
5. The access control unit 36 checks whether there is a valid cookie associated with the request. If a valid cookie is found then the cookie is updated to reflect the new time of access (step 14) and the requested page is then returned as in step 15 below. If there is no cookie, (which will be the case if no previous access request has been made from the WAP phone 32, or if the time elapsed since the previous access time recorded for the cookie is longer than a timeout stated in the cookie configuration) the access control unit 36 identifies the request as one requiring a login, and returns a prompt page (in HTML over HTTP) to the transcoder 35, prompting for the Username and security codes: that is, the user's PIN and the pseudo-random code currently shown on the token.
6. The Transcoder 35 receives the prompt page from the access control unit 36 and converts the HTML to WML and passes this page to the WAP Gateway 34.
7. The WAP Gateway 34 converts the HTTP protocol to WTP and delivers it to the WAP Phone 32 where it is displayed.
8. The user enters a username and PIN along with the six-digit pseudo-random number shown on the token at that time.
9. The WAP Phone 32 sends the results of the page to the WAP Gateway 34 as a WML formatted response using WTP over IP.
10. The WAP Gateway 34 converts the WTP protocol to HTTP and passes the result to the Transcoder 35.
11. The Transcoder 35 converts the WML response to HTML and sends this on to the Access control unit 36 using HTTP.
12. The Access control unit 36 checks the username, PIN and pseudo-random number against data stored in and generated by the Security server 37 to determine if the user should be authenticated.
13. If the details do not match, a rejection is sent back to the user as an HTML page which is translated by the Transcoder 35 and delivered through the WAP Gateway 34 to the phone 32, as in steps 5-12. This process is repeated either until the correct details are received or a maximum number of repetitions is exceeded. If the number of attempts exceeds the maximum the Security server 37 disables all entries for the username.
14. If the Security server 37 determines the credentials match then the Access control unit 36 sets a "cookie" on the transcoder 35 against the identity of the WAP phone 32 using HTML and HTTP. (If a valid cookie already exists for the WAP phone, (see step 5), the latest access time recorded by the cookie is updated).
15. The Access control unit 36 then fetches from the data network 308 the original page that was requested and sends it as HTML or WML using HTTP to the Transcoder 35. If the page is in HTML, the transcoder 35 converts the HTML to WML. The WML page is passed, using HTTP, to the WAP Gateway 34 which converts the HTTP to WTP and delivers it to the WAP phone.

## Claims

1. Access control system for controlling a gateway server (36) giving access from a terminal (32) to a telecommunications network (38), comprising:
interface (33, 34, 35) means for connection to a telecommunications terminal, the interface means having first access control means (34) arranged to receive authentication data generated automatically by the terminal (32) to permit access to the telecommunications network (38);
and a secure access system connected to the interface means and comprising second access control means (36) to provide access to the telecommunications network (38) only to selected terminals
the second access control means (36) having a user authentication database (37), and means for generating a login prompt signal for transmission to the telecommunications terminal (32) in response to a request for access, means for comparing a login signal received from the telecommunications terminal (32) with data stored in the user authentication database (37) and means for providing a connection to the telecommunications network (38).

2. Access control system according to claim 1, in which the interface means includes a transcoding system (34, 35) for conversion of data between a system compatible with the telecommunications terminal (32) and a system compatible with the secure access system (36).

3. Access control system according to claim 1 or claim 2 wherein the interface means includes storage means (35) to store a value relating to telecommunications terminals which have previously requested access,
wherein the second access control means (36) is arranged to cause a value to be stored in the storage means (35) indicative of a telecommunications terminal (32) that has gained access to the telecommunications network (38),
the interface means being arranged to retrieve a stored value from the storage means (35) and deliver it to the second access control means (36) with an incoming request,
and the second access control means (36) is arranged to make a connection to the telecommunications network (38) without the generation of a login prompt if such a value is supplied by the interface means (35) in respect of the telecommunications terminal (32) making the request.

4. Method of controlling access from a terminal (32) to a telecommunications network (38), the method comprising the steps of:
establishing communication between the terminal (32) and an interface means (33, 34, 35);
transmitting an automatic request for access (1), accompanied by authentication data from the terminal (32) to the first access control means (33),
forwarding the request for access (2, 3, 4), to a secure access control system (36) arranged to provide access to the telecommunications network (38) only for selected terminals (32);
transmitting (5, 6, 7) a login prompt signal from the secure access control system (36) to the telecommunications terminal (32) in response to the request for access (4);
returning a login signal (8, 9, 10, 11) from the telecommunications terminal (32) to the secure access control system (36);
comparing (12) the login signal (11) with data stored in a user authentication database (37) associated with the secure access control system (36);
providing a connection (15) to the telecommunications network (38) if the comparison (12) is validated.

5. Method according to claim 4, wherein the interface means (34, 35) also converts data between a system (WML/WTP) compatible with the telecommunications terminal (32) and a system (HTML/HTTP) compatible with the second access system (38).

6. Method according to claim 4 or claim 5, wherein the second access control means (36) generates a signal (14) in response to a successful comparison, to cause a value to be stored indicative of the telecommunications terminal (32) requesting access,
incoming requests (3,4) for access are associated with the stored values,
and the access control means (36) is controlled to make a connection (15) to the telecommunications network (38) without the generation of a further login prompt (5, 6, 7) if such a stored value is provided in respect of the telecommunications terminal (32) making the request.
